# EUROPEAN PATENT APPLICATION

(11) **EP 1 229 060 A1**
(43) Date of publication of application: **07.08.2002**
(21) Application number: 01300841.2
(22) Date of filing: 31.01.2001
(51) Int. Cl.: C08G 18/08, C08G 18/66, C08G 18/67, C08G 18/12, C09D 175/16, C08F 290/06

(54) **Emulsion resins such as urethane silicone acryl emulsions and production method therefor and dispersions thereof**

(71) Applicant: Rock Paint Co. Ltd., Osaka (JP)
(72) Inventor: Takemori, Masanori, Rock Paint Co. Ltd. Tokyo Br., Tokyo (JP)
(74) Representative: Lord, Hilton David

(57) **Abstract**

The present invention relates to an emulsion resin and a production method for same, which has the respective characteristic features of urethane, silicone, and acryl, and is usable as a binder for water-based coating and excellent in weather resistance, contamination resistance, toughness, and flexibility. Emulsifiable polymerisable polyurethane vinyl compound is synthesized by allowing glycol constituents having two hydroxy groups and at least one hydrophilic group contained in one molecule and polymerisable vinyl monomers having the functional group which can react with isocyanate to react with isocyanate compounds. The emulsion resin is produced by mixing beforehand this polymerisable polyurethane vinyl compound with the polymerisable vinyl monomer and reactive silane compound which may be added as needed under the condition of nonaqueous system, and then by polymerising them in water.

## Description

The present invention relates to urethane acryl emulsion resins, production methods therefore, and dispersions using said resins, and production methods for urethane silicone acryl emulsion resins having the respective characteristic features of urethane, silicone, and acryl. If the emulsion resins in accordance with the present invention is used as resins for use in water dispersion such as water coatings, its coatings may possess improved weather resistance, contamination resistance, chemical resistance, etc. They are usable as different kinds of dispersions such as paints, coating agents, etc.

Referring to the methods of preparing water resins is known a urethane acryl emulsion resin, which urethane resins and acryl resins have been chemically combined with each other, and which has been improved in the stability of emulsion and the transparency of coating which is liable to make an issue with the so-called blending system (Patent Application Laid Open No.2-86610). Furthermore, the emulsion resin was disclosed that has the carbonyl group and hydrazide group as contained in ketones or aldehydes, which have been built therein as a crosslinker, and a high solvent resistance due to the crosslinking performed after the formation of coatings (Patent Application Laid Open No.7-233347). One of the examples is a urethane acryl emulsion resin obtained by water-dispersing self-emulsifying urethane resins beforehand in the reaction vessel, and dripping emulsions into which polymerisable vinyl monomers has been water-emulsified together with initiators into said reaction vessel. There is a method of forming crosslinking coatings by providing said urethane acryl emulsion resins with the carbonyl and hydrazide groups as in Ketone or aldehyde. Additionally, a method is known of emulsion polymerising silane compounds having the polymerisable vinyl group with polymerisable vinyl monomers for improvement of the weather resistance and toughness (Patent Application Laid Open No.11-12332). However, said methods often essentially need the use of emulsifying agents for the purpose of dispersing polymerisable vinyl monomers or reactive silane compounds in water, preventing contamination of reaction device, and improving the stability of emulsion resins obtained. As a result, coatings obtained from these resins may not be provided with the desired weather resistance and contamination resistance because emulsifying agents are interposed between emulsion particles. An example of the urethane acryl emulsion resins using no emulsifying agent has been reported (Patent Application Laid Open No.6-287259), in which emulsion resins, the amount of acrylic components which can be formulated is small, and sometimes, such a resin as the resin intended for coating is difficult to design.

On the other hand, for the application, the coatings for use in the buildings, and in particular the outer walls are needed to be maintained unspoiled in the appearance. Water acryl silicone coatings or water acryl fluorine coatings which are excellent in weather resistance and contamination resistance are in use from the view point of environmental contamination and health protection of painting workers.

For example, in the event of water acrylic silicone, its functions of weather resistance and contamination resistance are expressed by a high energy in siloxane bond and the chemical reaction and hydrophilic nature that the silanol group has.

However, the fact is that silicone constituents which have been introduced in order to provide the functions of weather resistance and contamination resistance may crosslink to each other to a high degree in the emulsion particles, and the fusion and cross-linking of the emulsion particles become insufficient, whereby fragile and easily breakable coatings are formed, and not only the weather resistance and contamination resistance but also the performance of coatings, all of which are to be fully expected, are not obtainable.

In this view, the present invention is intended to provide emulsion resins which may form coatings having a high weather resistance, contamination resistance, toughness, and flexibility and methods of producing same. Particularly, the object of the present invention is to provide methods of producing emulsion resins of urethane silicone acryl, wherein no emulsifying agent is necessitated, no retention and elimination of solvent during the production process are necessary, and the production process can be simplified, and besides the obtained emulsion resins are very highly stable.

### BRIEF SUMMARY OF THE INVENTION

Having studied diligently in view of said tasks, the inventors of the present invention have completed the present invention by the following processes, wherein emulsion resins which are very stable in polymerisation, and in which a small amount of agglomerates have been formed, and the rate of residues of unreacted monomers is low may be obtained by emulsion polymerising polyurethane vinyl compounds having the emulsifying ability as reactive polyurethane macromonomers with polymerisable vinyl monomers in water, or more desirably, by emulsion polymerising the reactive polyurethane macromonomers with a mixture of polymerisable vinyl monomers and reactive silane compounds in water, and the obtained emulsion resins have been determined to show the natures that are good in the mechanical stability and shelf stability. Also the present invention was completed by finding out that the coatings formed with the present emulsion resins possess excellent physical properties necessary for coating binders, such as contamination resistance, weather resistance, and chemical resistance, etc.

The first invention in accordance with claim 1 provides a production method for emulsion resins characterized in that it comprises a first process of allowing glycolic constituents (1) having two hydroxy groups and at least one hydrophilic group contained in one molecule and polymerisable vinyl monomers (2) having the functional group that may react with isocyanate to react with isocyanate compounds (3) to obtain polymerisable polyurethane vinyl compounds (4) having the emulsifying ability, and a second process of emulsifying said polymerisable polyurethane vinyl compounds (4) and polymerisable vinyl monomers (5) by means of the emulsifying ability of said polymerisable polyurethane vinyl compounds (4) to polymerise both the compounds in water.

Said production method is intended to emulsifying said polymerisable polyurethane vinyl compounds (4) themselves and polymerisable vinyl monomers (5) using the excellent emulsifying ability of the polymerisable polyurethane vinyl compounds (4) so as to polymerise both the compounds in water. Any other emulsifying agent is not needed essentially. As a result, no emulsifying agent such as surface-active agents is substantially interposed between emulsion particles. Emulsion resins thus obtained are good in stability to ensure that the weather resistance and contamination resistance of resin coatings will be improved. And said production avoids the necessity of retention and removal of solvent so that procedure steps can be simplified. The glycolic constituents (1) involving hydrophilic groups are essential in that it may furnish polymerisable polyurethane vinyl compounds (4) with the emulsifying ability. Likewise, the glycolic constituents (1) can be used in conjunction with glycolic constituents wanting hydrophilic groups.

The second invention in accordance with claim 2 provides the production method for the emulsion resin as defined in claim 1 characterized in that the second process includes the following steps.

That is, the second process comprises a step of obtaining any one of a non-aqueous mixture of polymerisable polyurethane vinyl compounds (4) having the emulsifying ability and polymerisable vinyl monomers (5) which have been blended beforehand under the condition of non-aqueous system; and a non-aqueous mixture of polymerisable polyurethane vinyl compounds (4) having the emulsifying ability, polymerisable vinyl monomers (5) and silane compounds (6) having the reactive functional group in at least any one o:f the end and side chain which have been blended in advance under the condition of non-aqueous system, and a step of polymerising the obtained non-aqueous mixture in water.

In many conventional production methods for emulsion resins, it was customary for polymerisable vinyl monomers (5) to be added to polymerisable polyurethane vinyl compounds (4) which had been emulsified by emulsifying agents. With the second invention according to claim 2, however, the compositions of the non-aqueous mixture are emulsified by the emulsifying ability of the polymerisable polyurethane vinyl compound (4), and the blending operation is performed in advance under the condition of non-aqueous system, so that in the event of the emulsification of nonaqueous mixture, the reactive silane compounds (6) become incorporated into the polymerisable polyurethane vinyl compounds (4) immediately. This makes it possible to instantly create a core/shell-typed double structure in which unstable substances and water may be prevented from getting in contact with each other. And besides, in the present invention, the core/shell-typed double structure is not a mere plain one, wherein polymerisation reaction may occur mutually among said substances (4),(5),(6), so that emulsions in which said substances are strongly combined with each other may be obtained.

The third invention in accordance with claim 3 provides the production method for emulsion resins as defined in claim 1 or 2 characterized in that at least one species of said polymerisable vinyl monomers (5) is polymerisable silane compound. In addition to said method of introducing silane as reactive silane compound (6), the introduction method for silane that can be used is a method of introducing silane by using polymerisable vinyl monomers having the silyl group, one of the polymerisable vinyl monomers (5).

The fourth invention in accordance with claim 4 provides the production method for emulsion resins as defined in any one of claims 1 to 3 characterized in that said glycolic constituent (1) having two hydroxy groups and at least one hydrophilic group contained in one molecule is at least one species selected from the group consisting of a glycolic constituent whose hydrophilic group is of an ionic type which may bring about hydrophilic nature by subsequent neutralization and a glycolic constituent whose hydrophilic group is of a non-ionic type.

The fifth invention in accordance with claim 5 provides the production method for emulsion resins as defined in any one of claim 1 to 4 characterized in that the glycolic constituents (1) having two hydroxy groups and at least one hydrophilic group contained in one molecule and the glycol group free of hydrophilic group are used together.

The sixth invention in accordance with claim 6 provides a production method for emulsion resins as defined in any one of claims 1 to 5 characterized in that said polymerisable polyurethane vinyl compounds (4) having the emulsifying ability is polymerisable polyurethane vinyl compound (4) having at least one molecular polymerisable vinyl monomer contained in one molecule of the polyurethane compound as obtained by allowing said glycolic constituent (1) to react with diisocyanate compound (3) in the range of OH group/NCO group = 1.0 : 1.2 - 1.0 : 2.0 and then, allowing polyurethane compounds of terminal isocyanate thus obtained to react with polymerisable vinyl monomers (2) having the functional group which can react with isocyanate. Said polymerisable polyurethane vinyl compounds (4) may be polymerised with polymerisable vinyl monomers (5) in water as the reactive urethane macromonomers.

The seventh invention in accordance with claim 7 provides the production method for emulsion resins as defined in any one of claims 2 to 6 characterized in that the weight ratio of the total of the polymerisable vinyl monomers (5) and reactive silane compounds (6) to the polymerisable polyurethane vinyl compounds (4) is 100 to 2000 part by weight to 100 part by weight, and the weight ratio of the polymerisable vinyl monomer (5) to the silicone compound (6) having the functional group formed at any one of the end and the side chain ranges from 50 : 50 to 100 : 0.

The eighth invention in accordance with claim 8 provides emulsion resins synthesized by permitting the polymerisable polyurethane vinyl compounds (4) having the emulsifying ability as obtained by allowing the glycolic constituents (1) having two hydroxy groups and at least one hydrophilic group contained in one molecule and the polymerisable vinyl monomers (2) having the functional group which may react with isocyanate to react with the isocyanate compounds (3) to polymerise with polymerisable vinyl monomers (5) in water.

The ninth invention in accordance with claim 9 provides emulsion resin dispersions consisting of the emulsion resins and water solvent in which it is dispersed. That is, the ninth invention in accordance with claim 9 provides dispersions for use in water paints, coating agents or adhesives containing the emulsion resins as defined in claim 8 as the base.

### DETAILED DESCRIPTION OF THE PREFERRED EMBODIMENTS

The production process of emulsion resins in accordance with the present invention comprises a process (thereafter referred to as the first process) of synthesizing polymerisable polyurethane vinyl compounds (4) and a process (thereafter referred to as the second process) of polymerising said polymerisable polyurethane vinyl compounds (4) with polymerisable vinyl monomers (5) or a mixture of polymerisable vinyl monomers (5) and reactive silane compounds (6) in water.

The first process is intended to produce polymerisable polyurethane vinyl compounds (4) by allowing glycolic constituents (1) having two hydroxy groups and at least one hydrophilic group contained in one molecule and polymerisable vinyl monomers (2) having the functional group which may react with isocyanate to react with isocyanate compounds (3).

At this time, it is desirable to obtain polymerisable polyurethane vinyl compounds with at least one molecule of polymerisable vinyl monomer contained in one molecule of the polyurethane compound by steps of making 'd glycolic constituents (1) react with diisocyanate compounds in the range of OH group/NCO group = 1.0 : 1.2 ∼ 1.0 : 2.0 to obtain polyurethane compounds of terminal isocyanate, and then allowing the polyurethane compounds thus obtained of terminal isocyanate to react with polymerisable vinyl monomers (2) having the functional group which may react with isocyanate.

Specifically, for example, a process is arranged such that hydrophilic glycol (1) such as glycol, polyethylene glycol having carboxy group, sulfonic acid group, tertiary amino group is made to react with diisocyanate compounds (3), and then single-functional compounds which may react with polymerisable vinyl monomers (2) having the functional group that may react with isocyanate, and isocyanates such as butanol are used to allow the glycols (1) to react diisocyanate compounds (3) until the isocyanate groups completely disappear, thus resulting in synthesis of the polymerisable polyurethane vinyl compounds (4). Additionally, the polymerisable polyurethane vinyl compounds (4) can also be synthesized by reaction of isocyanate compounds (1) having the polymerisable vinyl group with said glycol (1). In the event of the reaction through isocyanate into urethane may be used known catalyst for use in preparation of urethane such as dibutyltindilaurate or dioctyltindilaurate, if necessary. If obtained polymeric polyurethane vinyl compounds (4) are so high in viscosity that they are inferior in workability, the polymerisable vinyl monomer (5) that will not virtually react with isocyanate may be added as reactive diluent. However, the present invention is not limited to these processes, and may be embodied by means of other methods.

Next, the glycol (1) having two hydroxy group and at least one hydrophilic group contained in one molecule for use in the first process will be described. This specific glycol (1) to be used has ionic or non-ionic groups. The hydrophilic group is an ionic group which will bring about hydrophilic nature through neutralization. Examples of the glycol with ionic group are glycol having the carboxylic group, sulfonic acid group or tertiary amino group, specifically, 2,2-dimethylol propionic acid, 2,2-dimethylol butanoic acid, 2,2-dimethylol butyric acid, 2,2-dimethylol valeric acid, 1,4butanediol-2-sodium sulfonate, N-methyldiethanolamine, etc. Glycol with carboxy group is preferable in particular. The group such as polyoxyethylene can be enumerated as an example of the non-ionic hydrophilic group. Examples of the glycols having non-ionic hydrophilic group are polyethylene glycols such as tetraethylene glycols, pentaethylene glycols, etc. whose preferable molecular weight ]is under 1000. They may be used separately or collectively except that alkali-reactive group can not be used together with amino group.

The glycol (1) to be used in the first step can be used especially with glycols free of ionic or non-ionic hydrophilic group. Examples of such glycols are ethylene glycol, propylene glycol, 1,4-butanediol, 1,6-hexanediol, 1,4cyclohexanedimethanol, polypropylene glycol, polytetramethylene glycol, polycaprolactondiol, condensate produced by union of ethylene glycol with adipic acid, condensate produced by union of neopentyl glycol and adipic acid, etc.

Examples of the polymerisable vinyl monomers (2) having the functional group which may react with isocyanate and being used in the first process are 2-hydyroxyethyl methacrylate, 2-hyclroxypropyl methacrylate, 2hydroxyethyl acrylate, 4-hydroxybutyl acrylate, polycaprolacton modified methacrylate, etc.
Examples of usable single-functional compounds which may react with isocyanate as aforementioned butanol etc. are monohydric alcohols, such as methanol, ethanol, propanol, 2-propanol, isobutanol, hexanol, benzyl alcohol, ethylene glycol monomethyl ether, ethylene glycol monoethyl ether, diethylene glycol monomethyl ether, diethylene glycol monoethyl ether; monoamine components such as ethylamine, propylamine, butylamine, diethylamine, dipropylamine, dibutylamine, γ-aminopropyl trimethoxysilane, 7 -aminopropyl ethoxy silane, etc. Even if there exist one or more groups that can react with isocyanate, no chain extension does not occur virtually, and constituents which may act as a stopper is also usable. Hydroxyacetic acid, ethanolamine, diethanolamine, etc. can be enumerated by way of example. Referring to diol constituents such as ethylene glycol, diethylene glycol, 1,4-butadiol, 1,6-hexanediol, propylene glycol, dipropylene glycol, etc., it is possible that they are allowed to perform chemical reaction under the condition that the ratio of NCO to OH is one to more than two, where too many OH group exists. These constituents that can react with isocyanate as set forth may be used separately or collectively.

Moreover, the diisocyanate (3) used in the first process involves aromatic series, aliphatic series, and alicyclic diisocyanate, more specifically, 2,4-tolylene diisocyanate, 2,6-tolylene diisocyanate, 4,4-diphenylmethane diisocyanate, xylene diisocyanate, α, α, α, α, - tetramethyl xylene diisocyanate, tetramethylene diisocyanate, hexamethylene diisocyanate, isophorone diisocyanate, 1,5-tetrahydronaphthalene diisocyanate, etc.

The second process is a process of emulsion polymerising in water a mixture of the polymerisable polyurethane vinyl compounds (4) having the emulsifying ability as synthesized in said first process as a reactive urethane macromonomer and polymerisable vinyl monomers (5), or a mixture of said polymerisable vinyl monomers (5) and reactive silane compounds (6) so as to obtain the intended emulsion resins.
Examples of polymerised vinyl monomers (5) that can be used in the second process are methacrylate ester group, ester group of their acrylic acids or amide group such as methyl methacrylate, ethyl methacrylate, 2-hydroxyethyl methacrylate, 2-hydroxypropyl methacrylate, propyl methacrylate, butyl methacrylate, hexyl methacrylate, cyclohexyl methacrylate, 2-ethylhexyl methacrylate, lauryl methacrylate etc.; styrene, vinyltoluene, vinyl acetate, vinyl propionate, etc., and compounds having two or more polymerisable vinyl groups contained in one molecule thereof such as ethylene glycol dimethacrylate, 1,4-butane dioldimethacrylate, 1,6-hexane dioldimethacrylate, compounds having over three vinyl groups contained in one molecule thereof like methacrylic acids or ester acrylate like ester acrylate such as ester acrylate, divinylbenzene, trimethylolethane, trimethylolpropane, pentaerythritol, and polymerisable vinyl monomers having the silyl group such as γ -methacryloyl propyltrimethoxysilane, γ- methacryloyl propylmethyl dimethoxysilane, polydimethylsiloxane modified vinyl compounds etc., can be also used.

The reactive silane compound (6) used in the second process is the alkoxysilane group free of polymerisable vinyl group, such as reactive silanes having the combination of carbon and silicon like tetramethoxysilane, tetraethoxysilane, and oligomers of these compounds, methyltrimethoxysilane, methyltriethoxysilane.

Preparatory to the second process for emulsion polymerisation, the aforementioned polymerisable vinyl monomers (5), or polymerisable vinyl monomers (5) and reactive silane compounds (6) are held mixed with the polymerisable polyurethane vinyl compounds (4) in non-aqueous system. In particular, in case of the hydrolysable silane compounds, said mixing in non-aqueous system is preferable in order to avoid direct touch of these compounds with water as much as possible at any subsequent emulsion polymerisation process. This specific mixing method may decrease excessive hydrolysis and combination of the hydrolysable silane in the emulsion polymerisation process and stain of the reaction device which may be caused by the combined silane. It is assumed that such an effect is attributed to the arrangement of said mixing method such that the polymerisable vinyl monomers (5), or the polymerisable vinyl monomers (5) and reactive silane compounds (6) is (are) mixed with the polymerisable polyurethane vinyl compounds (4) having the emulsifiable ability in advance in non-aqueous system, and such a non-aqueous mixture is introduced into water for emulsification, where the emulsified elements will instantly grow into a core/shell-typed double structure which contains hydrolysable silanes formed at the core side, and polymerisable polyurethane vinyl compounds (4) having the emulsifiable ability formed at the shell side, thereby improving the stability of the core constituents in the water. Moreover, prior to emulsion polymerisation of said mixture as produced in non-aqueous system, said mixture may be dispersed in water so as to adjust emulsification beforehand.

However, if the polymerisable polyurethane vinyl compound (4) having the emulsifiable ability is of an ionic type, it is necessary to neutralize it before use. When the ionic species is carboxy group or sulfonic group, examples of such a type of the polyurethane vinyl compound (4) are amine compounds such as triethylamine, trimethylamine, N-methyl morpholine, ethanolamine, diethanolamine, triethanolamine, N-methylethanolamine; ammonia; or sodium hydroxide, potassium hydroxide as inorganic base. Highly volatile bases are preferable in terms of the aspect of water resistance of paint films. If the ionic species is amine, said compound (4) includes acetic acid, propionic acid, hydrochloric acid, etc. The neutralization method based on neutralizers involves, for example, a method of adding said compounds direct to said mixture produced in non-aqueous system (a mixture of polymerisable polyurethane vinyl compounds (4) having the emulsifiable ability and polymerisable vinyl monomers (5), or a mixture of said compounds (4), said monomers (5), and reactive silane compounds (6), and a method of emulsifying said mixture produced in nonaqueous system after addition of neutralizer to water.

For the purpose of adjusting emulsion resins such as urethane silicone acryl emulsion using said dispersed solution, polymerisable vinyl monomers (5) and reactive silane compounds (6) are added to the dispersed solution, and the resultant is adjusted for prior emulsion by the use of a homogeniser. Then, the adjusted substance is dripped into a flask containing water and polymerisation initiator, in which it may undergo polymerisation.

Preferably, the ratio of polymerisable polyurethane vinyl compounds (4) having the emulsifiable ability to polymerisable vinyl monomers (5) + reactive silane compounds (6) is (4): (5) + (6) = 100 : 100 ∼ 100 : 2000, the ratio of (5) to (6) is 50 : 50 ∼ 100 : 0, and for easy dispersion in water, the ratio of (4) to (5) + (6) is 100 : 500 ∼ 100 : 1000.

Both water-soluble polymerisation initiator and oil polymerisation initiator may be used as the polymerisation initiator. It is preferable that the amount of polymerisation initiator to the weight of polymerisable vinyl monomers be 0.2% to 1.0%. When less than 0.2%, the polymerisable vinyl monomers may remain unreacted, and if the percentage exceeds said range, no emulsion resin that is excellent in shelf stability may be obtained.

As usable polymerisation initiators are there azo-system polymerisation initiator such as azobisisobutyronitrile, azobisvaleronitrile; peroxides such as benzoyl peroxide, t-butyl peroxy-2-ethyl hexanoate, di-2-ethylhexylperoxydincarbonate, ammonium persulfate, sodium persulfate, potassium persulfate, etc. These compounds may be used in conjunction with reducing agents as redox polymerisation initiators. Examples of the reducing agents are ascorbic acid, sodium ascorbate, sorbic acid, metasodium bisulfite, metapotassium bisulfite, ferric chloride, Rongalite, etc.

The water-soluble polymerisation initiator is taken into solution in water of a reaction vessel before use or dripping, or dissolved in water dispersion of vinyl monomer. The oil polymerisation initiator may be used which has been dissolved into vinyl monomer.

The polymerisation temperature for emulsion resin is preferably less than 100°C, and with the redox system, polymerisation can be executed at a temperature in the vicinity of 50°C.

The emulsion resin in accordance with the present invention may be prepared by blending additives, assistants, or other resinous constituents, as needed, as well as aforementioned constituents. The emulsion resin as obtained is dispersed in aqueous solvent (water or water and water-soluble solvent, and then, compounded with constituents as pigment, dye, aggregate, or different kinds of additives depending on the intended use, whereby it may be utilised as aqueous dispersion. Such an aqueous dispersion can be used as coating agents or adhesives, and in conjunction with other resins or aqueous dispersions.

Thus, preferred embodiments are as follows:
A production method for emulsion resins characterized in that it comprises a first process of allowing the glycolic constituents (1) having two hydroxy groups and at least one hydrophilic groups contained in one molecule and polymerisable vinyl monomers (2) having a functional group which may react with isocyanate to react with isocyanate compounds (3) to obtain polymerisable polyurethane vinyl compounds (4) having the emulsifying ability, and a second process of emulsifying said polymerisable polyurethane vinyl compounds (4) and polymerisable vinyl monomers (5) by means of the emulsifying ability of said polymerisable polyurethane vinyl compound (4) to polymerise both the compounds in water;
A method as defined above, characterized in that the second process comprises a step of obtaining either a non-aqueous mixture prepared in advance by mixing the polymerisable polyurethane vinyl compounds (4) having the emulsifying ability with the polymerisable vinyl monomers (5) under the condition of non-aqueous system, or a non-aqueous mixture prepared in advance by mixing the polymerisable vinyl compounds having the emulsifying ability the polymerisable vinyl monomers (5) and silane compounds (6) having the reactive functional group formed in at least any one of the end and the side chain under the condition of non-aqueous system, and a step of polymerising the obtained non-aqueous mixture in water;
A method as defined above, characterized in that at least one species of the polymerisable vinyl monomers (5) is a polymerisable silane compound;
A method as defined above, characterized in that the glycolic constituents (1) having two hydroxy groups and at least one hydrophilic group contained in one molecule is at least one selected from groups consisting of a glycolic constituent whose hydrophilic group is of an ionic type that may bring hydrophilic nature due to subsequent neutralization and a glycolic constituent whose hydrophilic group is of a non-ionic type;
A method as defined above, characterized in that the combination of the glycolic constituent (1) having two hydroxy groups and at least one hydrophilic group contained in one molecule and a glycol group free of hydrophilic group is in use;
A method as defined above, characterized in that said polymerisable polyurethane vinyl compounds (4) having said emulsifying ability is produced by allowing said glycolic constituents (1) to react with diisocyanate compounds in the range of OH group/NCO group = 1.0: 1.2 - 1.0:2.0, and then, allowing the obtained polyurethane compounds of the terminal isocyanate to react with the polymerisable vinyl monomers (2) having the functional group which may react with isocyanate;
A method as defined above, wherein the total part by weight of the polymerisable vinyl monomers (5) and the reactive silane compounds (6) to 100 parts by weight of the polymerisable polyurethane vinyl compounds (4) is 100 to 2000 in weight ratio, and the weight ratio of the polymerisable vinyl monomers (5) to the silicone compounds (6) having the reactive functional group formed in at least any one of the end and side chain is in the range of 50 : 50 to 100 : 0;
An emulsion resin characterized in that polymerisable polyurethane vinyl compounds (4) having the emulsifiable ability as obtained by allowing the glycolic constituents (1) having two hydroxy groups and at least one hydrophilic group contained in one molecule and polymerisable vinyl monomers (2) having the functional group which may react with isocyanate to react with isocyanate compounds (3); the polymerisable vinyl monomers (5) and silane compounds (6) having the reactive functional group formed at least any one of the end and side chain are polymerised in water, whereby a core/shell-typed structure having the silane compounds contained in the core side and the polymerisable polyurethane vinyl compounds provided at the shell side is formed, and the silane compounds and polymerisable polyurethane vinyl compounds are polymerised;
An emulsion resin dispersion wherein the emulsion resins as defined above are dispersed in a water solvent.

### EXAMPLES

Now the present invention will be described with reference to the following examples, but the invention is not limited to the examples being illustrated.

### EXAMPLE I [ADJUSTMENT METHOD FOR EMULSIFIABLE POLYMERIZABLE POLYURETHANE VINYL COMPOUND (4)-1]

Dimethylol propionic acid (50.0g), butylene adipate of 500 molecular weight (184.0g), isophorone diisocyanate (247.0g), and dibutyltinlaurate (0.05g) are put into a 2L flask equipped with a nitrogen gas introduction tube, a thermometer, a capacitor, and an agitator, and these compounds were allowed to react at an internal temperature of 80° C under the atmosphere of nitrogen for four hours. Furthermore, they were heated and agitated for one hour, and then, it was determined through IR spectrum that no absorption of NCO having a wavelength of 2240 cm ⁻¹ had been decreased. 2-hydroxyethyl methacrylate (47.75g) and butanol (27.25g) were added to the resultant, and the mixture was allowed to react for three hours. After it was determined by IR spectrum that the absorption of NCO having a wavelength of 2240cm⁻¹ had disappeared, methyl methacrylate (556.05g) was added and dissolved uniformly until polymerisable polyurethane vinyl compounds (4)-1 having the emulsifiable ability and 50% methylmethacrylate have been obtained.

### EXAMPLE 2 [ADJUSTMENT METHOD FOR EMULSIFIABLE POLYMERIZABLE POLYURETHANE VINYL COMPOUND (4)-2]

Dimethylol propionic acid (50.0g), 1,6-hexanchol (43.4g), isophorone (diisocyanate (247.0g), and dibutyltindilaurate (0.05g) were put into a 2L flask equipped with a nitrogen gas introduction tube, a thermometer, a capacitor, and an agitator, and these compounds were allowed to react at an internal temperature of 80°C under the nitrogen atmosphere for four hours, followed by heating and agitation processes for one hour, and it was determined through IR spectrum that no absorption of NCO having a wavelength of 2240cm⁻¹ had decreased. Then, 2-hydroxyethyl methacrylate (47.75g) and butanol (27.25g) were introduced and made to react for three hours. After the determination by IR spectrum of disappearance of absorption of NCO having a wavelength of 2240cm⁻¹, methyl methacrylate (415.45g) was added and dissolved uniformly until polymerisable polyurethane vinyl compounds (4)-2 having the emulsifiable ability and 50% methyl methacrylate have been obtained.

### COMPARATIVE EXAMPLE I [ADJUSTMENT METHOD FOR EMULSIFIABLE POLYMERIZABLE POLYURETHANE COMPOUND (comparison)-I]

Dimethylol propionic acid (50.0g), 1,6-hexanediol (43.4g), isophorone diisocyanate (247.0g), and dibutyltinlaurate (0.05g) were put into a 2L flask equipped with a nitrogen gas introduction tube, a thermometer, a capacitor, and an agitator, and allowed to react at an internal temperature of 80°C under the nitrogen atmosphere for four hours, followed by heating and agitation processes for one hour, and then it was determined by IR spectrum that no absorption of NCO having a wavelength of 2240cm-1 had decreased. Then, butanol (54.5g) was added and made to react for three hours. After the determination by IR spectrum of disappearance of the absorption of NCO having a wavelength of 2240cm⁻¹, methyl methacrylate (394.95g) was added and dissolved uniformly until polymerisable polyurethane compounds having the emulsifiable ability and 50% methyl methacrylate (comparison)1 have been obtained.

### EXAMPLE 1-1 [ADJUSTMENT METHOD FOR URETHANE ACRYL EMULSION RESIN USING (4)-1]

Demineralised water (250.0g) was put into a 2L flask equipped with a nitrogen gas introduction tube, a thermometer, a capacitor, and an agitator, and heated at a temperature of 80°C for replacement of nitrogen. Demineralised water (301.4g), trimethylamine (8.6g), and then a mixture of (4)-1 (212.5g), styrene (80.0g), 2-ethylhexyl acrylate (50.0g), and n-butyl methacrylate (55.5g) were put into a IL flask so as to adjust emulsion of urethane acryl monomers. The resultant and demineralised water (40.0g) in which sodium persulfate (2.0g) had been dissolved were dripped with the same speed into the reaction flask over four hours. Then, the dripped compositions were allowed to age at 80°C for three hours until the urethane acrylic emulsion resins (4)-1-1 had been obtained.

### EXAMPLE 1-2 [ADJUSTMENT METHOD FOR URETHANE SILICONE ACRYL EMULSION RESIN USING (4)-1]

Demineralised water (250.0g) is put into a 2L flask equipped with a nitrogen gas introduction tube, a thermometer, a capacitor, and an agitator, and heated at a temperature of 80'C for substitution of nitrogen. Additionally, a mixture of demineralised water (301.4g), triethylamine (8.6g), and then, (4)-1(212.5g), styrene (80.0g), 2-ethylhexyl acrylate (30.0g), n-butyl methacrylate (35.5g), γ-methacryloylpropyl trimethoxysilane (20.0g), and methyltrimethoxysilane (20.0g) was put into a 1L flask for adjustment of emulsion of urethane silicone acryl monomers. The resultant and demineralised water (40.0g) in which sodium persulfate (2.0g) had been dissolved were dripped at the same speed into a reaction flask over four hours. And then, the dripped compositions were allowed to age at 80°C for three hours until urethane silicone acryl emulsion resins (4)-1-2 had been obtained.

### EXAMPLE 2-1 [ADJUSTMENT METHOD FOR URETHANE ACRYL EMULSION RESIN USING (4)-21

Demineralised water (250.0g) was put into a 2L flask equipped with a nitrogen gas introduction tube, a thermometer, a capacitor, and an agitator, and heated at a temperature of 80' C for substitution of nitrogen, and additionally, a mixture of demineralised water (301.4g), triethylamine (8.6g), and then, (4)-2 (158.7g), styrene (80.0g), 2-ethylhexyl methacrylate (60.0g), and n-butyl methacrylate (99.3g) was put into a 1L flask for adjustment of emulsion of urethane acryl monomers. The resultant and demineralised water (40.0g) in which sodium persulfate (2.0g) had been dissolved were dripped at the same speed into a reaction flask over four hours. And then, the dripped compositions were allowed to age at 80°C for three hours until urethane acryl emulsion resin (4)-2-1 had been obtained.

### EXAMPLE 2-2 [ADJUSTMENT METHOD FOR URETHANE SILICONE ACRYL EMULSION RESIN USING (4)-2]

Demineralised water (250.0g) was put into a 2L flask equipped with a nitrogen gas introduction tube, a thermometer, a capacitor, and an agitator, and heated at a temperature of 80' C for substitution of nitrogen, and additionally, a mixture of demineralised water (301.4g), triethylamine (8.6g), and then, (4)-2 (158.7g), styrene (80.0g), 2-ethylhexyl acrylate (40.0g), n-butyl methacrylate (79.3g), γ-methacryloyl propyltrimethoxysilane (20.0g), and methyl trimethoxysilane (20.0g) was put into a 1L flask for adjustment of emulsions of urethane silicone acryl monomer. The resultant and demineralised water (40.0g) in which sodium persulfate (2.0g) had been dissolved were dripped at the same speed into a reaction flask over four hours. And then, the dripped compositions were allowed to age at 80' C for three hours until urethane silicone acryl emulsion resins (4)-2-2 had been obtained.

### COMPARATIVE EXAMPLE 1-1 [ADJUSTMENT METHOD FOR URETHANE ACRYL EMULSION RESIN USING (COMPARISON)-1]

Demineralised water (250.0g) was put into a 2L flask equipped with a nitrogen gas introduction tube, a thermometer, a capacitor, and an agitator, and heated at a temperature of 80°C for substitution of nitrogen, and additionally, a mixture of demineralised water (301.4g), triethylamine (8.6g), and then, (comparison)-1 (150.9g), styrene (80.0g), 2-ethylhexyl acrylate (62.0g), and n-butyl methacrylate (105.1g) was put into a IL flask for adjustment of emulsions of urethane acryl monomer. The resultant and demineralised water (40.0g) in which sodium persulfate (2.0g) had been dissolved were dripped at the same speed into a reaction flask over four hours. And then, the dripped compositions were allowed to age at 80°C for three hours until urethane acryl emulsion resins ((comparison)1-1) had been obtained.

### COMPARATIVE EXAMPLE 1-2 [ADJUSTMENT METHOD FOR URETHANE SILICONE ACRYL EMULSION RESIN USING (COMPARISON)-1]

Demineralised water (250.0g) was put into a 2L flask equipped with a nitrogen gas introduction tube, a thermometer, a capacitor, and an agitator, and heated at a temperature of 80°C for substitution of nitrogen, and additionally, a mixture of demineralised water (301.4g), triethylamine (8.6g), and then, (comparison)-1 (150.9g), styrene (80.0g), 2-ethylhexyl acrylate (42.0g), n-butyl methacrylate (8 5. 1 g), 7 -methacryloyl propyltrimethoxysilane (20.0g), and methyl trimethoxysilane (20.0g) was put into an IL flask for adjustment of emulsions of urethane silicone acryl monomer. The resultant and demineralised water (40.0g) in which sodium persulfate (2.0g) had been dissolved were dripped at the same speed into a reaction flask over four hours. And then, the dripped compositions were allowed to age at 80°C for three hours until urethane silicone acryl emulsion resins ((comparison)-1-2) had been obtained.

### COMPARATIVE EXAMPLE 2-1 [ADJUSTMENT METHOD FOR ACRYL EMULSION RESIN]

Demineralised water (250.0g) was put into a 2L flask equipped with a nitrogen gas introduction tube, a thermometer, a capacitor, and an agitator, and heated at a temperature of 80°C for substitution of nitrogen, and additionally, demineralised water (310.0g), dodecyl benzensulfonsodium (2.5g), and polyethylene glycol modified methacrylate (20.0g) were put into a IL flask equipped with a homogeniser, and the homogeniser was put into motion. Styrene (80.0g), 2-ethylhexyl acrylate (90.0g), n-butyl methacrylate (99.2g), and methyl methacrylate (106.3g) were added to the mixture in the 1L flask, and then, the homogeniser was made to run for five minutes for adjustment of emulsions of acryl monomer. The resultant and demineralised water (40.0g) in which sodium persulfate (2.0g) had been dissolved were dripped at the same speed into a reaction flask over four hours. And then, the dripped compositions were allowed to age for three hours until acryl emulsion resins ((comparison)-2-1) had been obtained.

### COMPARATIVE EXAMPLE 2-2 [ADJUSTMENT METHOD FOR SILICONE ACRYL EMULSION RESIN]

Demineralised water (250.0g) was put into a 2L flask equipped with a nitrogen gas instruction tube, a thermometer, a capacitor, and an agitator, and heated at a temperature of 80°C for substitution of nitrogen, and additionally, demineralised water (310.0g), dodecyl benzensulfonsodium (2.5g), and polyethylene glycol modified methacrylate (20.0g) were put into a IL flask equipped with a homogeniser, and the homogeniser was put into motion. Styrene (80.0g), 2-ethylhexyl acrylate (70.0g), n-butyl methacrylate (7 9.2 g), methyl methacrylate (1 0 6.3 g), γ-methacryloyl propyltrimethoxysilane (20.0g), and methyl trimethoxysilane (20.0g) were added to the mixture in the IL flask, and then, the homogeniser was made to run for five minutes for adjustment of emulsions of acryl monomer. The resultant and demineralised water (40.0g) in which sodium persulfate (2.0g) had been dissolved were dripped at the same speed into a reaction flask over four hours. And then, the dripped compositions were made to age at 80°C for three hours until silicone acryl emulsion resins ((comparison)-2-2) had been obtained.

### EVALUATION METHOD

The amount of agglomerates in the synthesizing process for emulsion resin was inspected for the purpose of evaluation of the performance of the emulsion resins as obtained in accordance with the examples and comparative examples, and the water resistance, oil resistance, and contamination resistance for the purpose of evaluation of the coatings, and the results are shown in the table 1. The coatings, which had been produced by applying 5% butyl cellosolve to the emulsions as a coat producing agent and regulating the amount of the resultant by the use of a 15 mil doctor blade on a glass plate, and held at the room temperature for five days, was subjected to test.

Referring to the evaluation of agglomerates, the emulsion resins agglomerated after synthesized was judged in terms of its amount. A ... substantially nil; B ... only a few; C ... some few; D ... quite a few.

Referring to the water resistance, the coatings as formed was immersed in water at 25°C for 48 hours, and the external appearance of the coatings was evaluated visually in the following four ratings. A ... no change; B ... slightly whitened; C ... ordinarily whitened; D ... partially melted.

With regard to the oil resistance, the coatings were immersed in salad oil at 25°C, and the external appearance of the coatings after a lapse of 12 hours was evaluated through viewing and touch in the four ratings. A ... no tack and no change; B ... slightly tacky; C ... tacky and partially melted; D ... considerably tacky and mostly melted.

As regards the contamination resistance, 5% carbon water was applied to the coatings, and after dried at 40°C for two hours, the carbon was eliminated by water stream, and the degree of contamination was evaluated visually in the four ratings. A ... rarely contaminated; B ... slightly contaminated; C ... contaminated; D ... considerably contaminated.

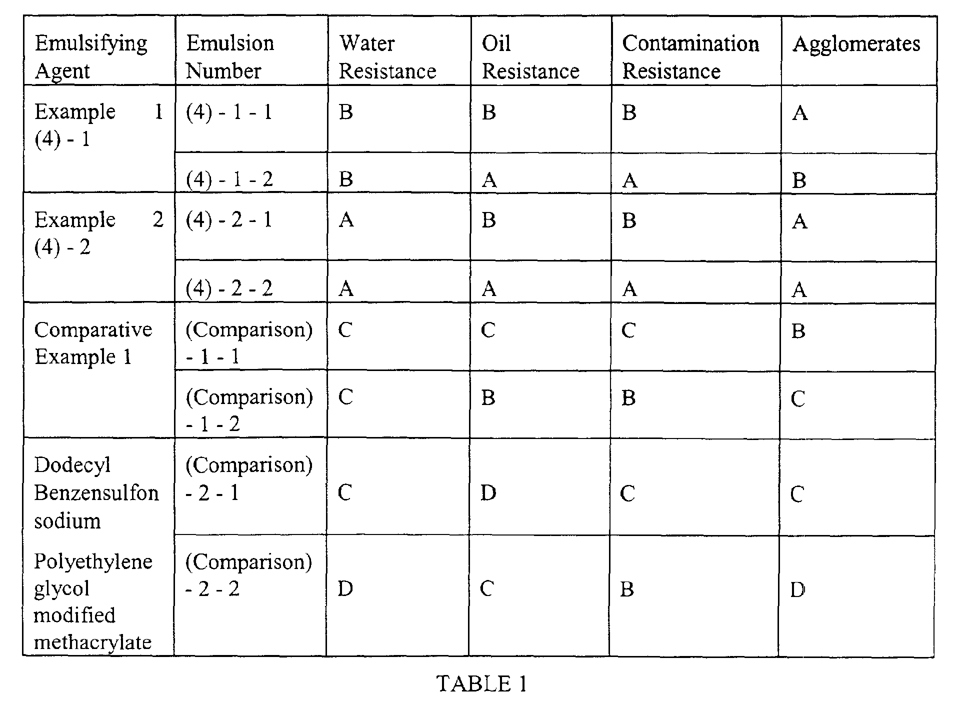

The present invention as defined in claims 1 to 7 provides a production method for emulsion resin which may form excellent coatings in weather resistance, contamination resistance, toughness, and flexibility. In particular, the production method in accordance with the present Invention needs no emulsifying agent, and requires no retention or removal of solvent during the manufacturing process so as to simplify the Procedures, and emulsions obtained by this method is very good in stability.

Especially, the invention defined in claims 2 and 3 may provide urethane silicone acryl emulsion resin which not only has the respective different characteristic features of urethane, silicone, and acryl but also may remove any harmful effects involved in the introduction of silicone as in the conventional emulsion resins.

Furthermore, the invention as defined in claims 4 to 7 may provide the production methods for emulsion resin which may achieve the aforementioned performances more reliably.

The present invention as defined in claim 8 may provide emulsion resins which may form coatings excellent in weather resistance, contamination resistance, toughness, and flexibility. Especially, the production of said resins needs no emulsifying agent, and requires no retention or removal of solvent during the production process so as to simplify the procedures, and may have an effect that the emulsion resins obtained are highly stable.

Furthermore, the invention as defined in claim 9 may provide excellent dispersions of emulsion resin which may form coatings provided with high weather resistance, contamination resistance, toughness, and flexibility.

## Claims

1. A process for the preparation of emulsion resins **characterised by**:
first, combining a glycol monomer with a vinyl monomer and an isocyanate monomer, either separately or together, thereby to obtain a polyurethane vinyl macromonomeric mixture, the glycol having a hydrophilic substituent in addition to two hydroxyl groups, and;
second, polymerising the macromonomeric mixture with a second vinyl monomer in the presence of water.

2. A process for the production of emulsion resins, **characterised in that** it comprises a first step of allowing the glycolic constituents having two hydroxy groups and at least one further hydrophilic group contained in one molecule and polymerisable vinyl monomers having a functional group capable of reacting with isocyanate to react with isocyanate compounds to obtain emulsifiable, polymerisable polyurethane vinyl compounds, and a second step of emulsifying and polymerising said polymerisable polyurethane vinyl compounds with further polymerisable vinyl monomers in water.

3. A process according to claim 1 or 2, wherein the constituents of the second step are first mixed in the absence of water.

4. A process according to any preceding claim, wherein at least one species of polymerisable vinyl monomer is a polymerisable silane compound.

5. A process according to any preceding claim, wherein the glycolic hydrophilic substituent or substituents are, either ionic and neutralisable to form a non-charged hydrophilic group, or non-ionic.

6. A process according to any preceding claim, wherein an unsubstituted glycol monomer is also used.

7. A process according to any preceding claim, wherein the ratio of glycolic constituents to diisocyanate compounds is in the range of OH group/NCO group 1.0:1.2 to 1.0:2.0.

8. A process according to claim 7, wherein the glycol and isocyanate monomers are allowed to react first, before the addition of the vinyl monomer.

9. A process according to any preceding claim, wherein, in the second step, silane monomers having a terminal functional group are added prior to polymerisation.

10. A process according to claim 9, wherein, in the second step, the combined total weight ratio of the vinyl monomers and the reactive silane compounds to 100 parts by weight of the polymerisable polyurethane vinyl compounds is 100 to 2000, and wherein the weight ratio of the vinyl monomers to the silicone compounds being in the range of 50 : 50 to 100 : 0.

11. An emulsion resin obtained by a process according to any preceding claim, and wherein a core/shell-typed structure having the silane compounds contained in the core and the polymerisable polyurethane vinyl compounds provided at the shell is formed, the silane compounds and polymerisable polyurethane vinyl compounds being polymerised.

12. An emulsion resin dispersion wherein the emulsion resins as defined in claim 11 are dispersed in a water solvent.

13. A mixture of a polyurethane vinyl macromonomer emulsifiable in water, a vinyl monomer and a silane monomer.

14. An aqueous emulsion of a polyurethane, vinyl, silane polymer.
